# EUROPEAN PATENT APPLICATION

(11) **EP 2 546 746 A1**
(43) Date of publication of application: **16.01.2013**
(21) Application number: 11461526.3
(22) Date of filing: 14.07.2011
(51) Int. Cl.: G06F 11/07

(54) **Fault detection system and method of processing request in the fault detection system**

(71) Applicant: Alcatel-Lucent Polska Sp. z.o.o., 85-776 Bydgoszcz (PL)
(72) Inventor: Hruszka, Henryk, 85-164 Bydgoszcz (PL); Nowak, Rafal, 85-435 Bydgoszcz (PL); Wawrzyniak, Robert, 85-856 Bydgoszcz (PL); Kuriata, Andrzej, 85-791 Bydgoszcz (PL); Wyczynski, Tomasz, 85-794 Bydgoszcz (PL)
(74) Representative: Wlasienko, Jozef

(57) **Abstract**

Fault Detection System (120) placed between User Interface layer (100) and Service Execution Framework (230) in an Application layer (110), designed such that each service is a plug-in, registered and executed in a context of a Framework (230) wherein Fault Detection System (120) can attach or detach plug-in at any time, the Fault Detection System (120) employing configurable rules (210) and communicating with Database module (420) in order to store statistic data, the Fault Detection System (120) comprising functional modules. The functional modules are Controller (470), Database Interface module (410), Fault Detection Proxy module (430), Decider module (440), Application Interface module (460), Global Data Manager module (450) and Database module (420).

A method of processing request in a Fault Detection System (120) placed between User Interface layer (100) and Service Execution Framework (230) in an Application layer (110), designed such that each service is a plug-in, registered and executing in a context of a Framework (230) wherein Fault Detection System (120) can attach or detach plug-in at any time, the Fault Detection System (120) employing configurable rules (210) and communicating with database in order to store statistic data, the Fault Detection System (120) comprising functional modules, the method comprising the steps of: receiving a request from User Interface layer (100) directed to Service Execution Framework (230), processing the request, and returning result or error code based on configurable rules (210).

## Description

### FIELD OF INVENTION

This invention relates to fault detection system and method of processing request in the fault detection system in software architecture.

### BACKGROUND

Today's software for telecom products is very complex and it's not easy to find all software defects before delivering software/product to the customer. Defects detected in the customer network are very expensive and lead to the customer dissatisfaction.

Therefore there is a need for a solution that will minimize an impact of software defects on the system and will avoid potential total system outages caused by these software defects.

The major underling requirement for this software architecture solution is to identify and isolate defective software sprite and still be able to offer other healthy services to subscribers. The experience of the Inventors shows that a failure of a single service usually impacts other services leading even to the system crash.

The aim of the invention is to provide a solution which is embedded (built-in) in the software itself making it able to monitor and heal itself. Of course using internal or external monitoring can be used in conjunction with built-in monitoring system.

A dynamic library loading is a mechanism used to allow program in execution to invoke new functions and having access to new capabilities. This mechanism can be also used to unload a library, for example when it's no longer needed, or is causing problems. Similar results may be also achieved in plug-in architecture, by loading or unload a plug-in.

Currently available and widely used solutions to this problem rely on so called process integrity mechanism, which monitors dedicated services/processes and restarts every process causing failure (e.g. memory corruption). However, the mechanism is not able to recognize interactions between dependent processes. For example, a simple process implementing a certain service may consume up to 90% of CPU budget due to a software defect, causing unavailability of other services in the system. The process integrity mechanism allows such situation because neither memory nor CPU budget is fully exhausted. Most of existing solutions provide separate (internal or external) monitoring systems that observe system behavior.

Some of commercial and open-source solutions addressing problem of failing in a controller manner, minimizing impact on end-users and healthy system components, are listed below.

VMware vSphere VMware Fault Tolerance (http://www.vmware.com/products/fault-tolerance/) thrives to eliminate downtime due to hardware failures. VMware Fault Tolerance provides continuous availability for applications in the event of server failures, by creating a live shadow instance of a virtual machine that is in virtual lockstep with the primary instance. By allowing instantaneous failover between the two instances in the event of hardware failure, VMware Fault Tolerance eliminates a chance of data loss or disruption.

Linux FailSafe http://oss.sgi.com/projects/failsafe/ provides a simple way to make applications highly available without having to resort to rewriting or recompiling or the need to invest in expensive hardware solutions. Linux FailSafe provides a robust clustering environment with resilience from any single point of failure.

Oracle Fail Safe http://www.oracle.com/technetwork/database/windows/index-082893.html is a core feature included with every Oracle 11g and Oracle 10g license for Windows 2003 R2, and Windows 2008. It is a high availability software, integrated with Microsoft Cluster Server, that provides a fast, easy, and accurate way to configure and verify Windows clusters and to automatically fail over Oracle databases and applications. In the event of a system failure, Oracle Fail Safe works with Microsoft Cluster Server to restart Oracle databases and applications on a surviving cluster node.

The drawback of the solutions mentioned above is that they tend to deal with hardware failures only, are suited for proprietary software (VMware, Oracle DB), and are not concerned with real-time systems. In addition, these solutions do not deal with software failures. Today complete telecom services consist of both hardware and software, so advanced Fault Tolerant system must handle software and hardware failures. In this invention there is presented a solution that allows to control software failures.

### SUMMARY

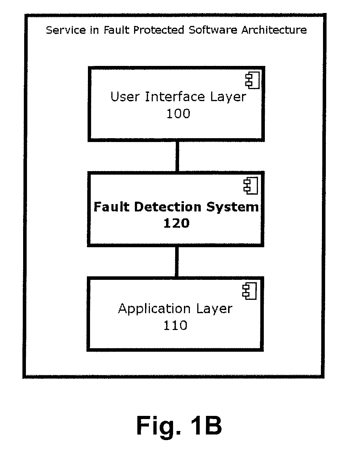

Today most of services (e.g. Internet service) take service request via User Interface (e.g. Web or Telephony) and process this request within Application layer. When the result of requested action is determined, either positive or negative (for example: error, timeout, lack of resources, lack of sufficient privileges), it is returned to the User, via User Interface layer. In order to monitor and control what result Application layer passes to User Interface layer and take appropriate action based on the result there is introduced a new layer in this model called Fault Detection System (Figure 1B). This new layer represented by Fault Detection System is subject of this invention. Proposed solution presents a concept of a novel solution increasing reliability for software oriented systems.

Fault Detection System placed between User Interface layer and Service Execution Framework in an Application layer designed such that each service is a plug-in, registered and executed in a context of a Framework wherein Fault Detection System can attach or detach plug-in at any time, the Fault Detection System employing configurable rules and communicating with database in order to store statistic data, the Fault Detection System comprising functional modules.

Preferably, Fault Detection System comprises, as a functional module, Controller responsible for module loading, events call flow, creating/deleting timers related threads, creating/deleting event related threads, handling of thread pool, startup/shutdown of the system.

Preferably, Fault Detection System comprises, as a functional module, Database Interface module responsible for Database module operations, storing configuration and run-time data.

Preferably, Fault Detection System comprises, as a functional module, Fault Detection Proxy module responsible for creating Fault Detection Proxy responses when operation is blocked, verifying timeouts, tracking in-progress requests, finding duplicates, and handling two way communication.

Preferably, Fault Detection System comprises, as a functional module, Decider module communicating with Fault Detection Proxy and responsible for making decisions about blocking/unblocking requests.

Preferably, Fault Detection System comprises, as a functional module, Application Interface module assigning internal event's identifiers to external requests coming from User Interface layer and responsible for passing requests/responses from/to User Interface layer/ Application layer.

Preferably, Fault Detection System comprises, as a functional module, Global Data Manager module responsible for data handling,

Preferably, Fault Detection System comprises, as a functional module, Database module for storing data.

Preferably, if number of failures for particular plug-in exceeds defined limit, Fault Detection System detaches the plug-in.

Preferably, if number of failures for particular plug-in exceeds defined limit, Fault Detection System triggers an alarm.

Preferably, the statistic data is stored in global application structures or shared memory.

Preferably, statistic data is access protected.

Preferably, single record of the statistic data contains: function name, max failure threshold, max timeout threshold, current failures counter, block flag (threshold reached).

Preferably, if a single function call fails within a specific period of time, any next call to this function will be blocked and immediate error reported.

Preferably, any successful function call resets function counters, thus rendering service as not blocked.

Preferably, when the Fault Detection System decides that a certain operation reached its error limit in given timeframe, or behave improperly, decision is made whether to allow this operation in the future or not.

A method of processing request in a Fault Detection System placed between User Interface layer and Service Execution Framework in an Application layer designed such that each service is a plug-in, registered and executing in a context of a Framework wherein Fault Detection System can attach or detach plug-in at any time, the Fault Detection System employing configurable rules and communicating with database in order to store statistic data, the Fault Detection System comprising functional modules, the method comprising the steps of:
receiving a request from User Interface layer directed to Service Execution Framework,
processing the request, and
returning result or error code based on configurable rules.

Preferably, method comprises the further step of storing statistic data (function counters) in global application structures or shared memory.

Preferably, method comprises the further step of blocking certain operation for a given time if that operation reaches its error limit in given timeframe.

Preferably, method comprises the further step of blocking certain operation for a given time if that operation doesn't return or reaches timeout.

Preferably, method comprises the further step of unblocking certain operation when configurable conditions are met.

Preferably, method comprises the further step of resetting functions counters in case of successful function call and rendering function as not blocked.

The concept of Fault Detection System, assumes that software is designed to de-activate failing/faulty pieces of the software, and is very closely related to the "proxy" software design pattern. Every functional piece of the Application layer is hidden behind the Fault Detection System. If a single function call fails within a specific period of time (also because of timeout), any next call to this function will be blocked and immediate error reported.

### BRIEF DESCRIPTION OF THE FIGURES

Some embodiments of apparatus and/or methods in accordance with embodiments of the present invention are now described, by way of example only, and with reference to the accompanying drawings, in which:
Figure 1A presents the solution known from the prior art.
Figure 1B presents a new solution with layer forming the Fault Detection System included between Application layer and User Interface layer, compared to solution known from the prior art.

Figure 2 presents an overall solution architecture.
Figure 3 presents activities associated with request processing, from entering the Fault Detection System, to returning result or error code.
Figure 4 presents details of solution design, and
Figure 5 presents sequence diagram illustrating dynamics of the system with detailed description of interactions between particular functional modules.

### DESCRIPTION OF EMBODIMENTS

The present invention will be described in detail hereinafter on the basis of embodiments illustrated in the drawings.

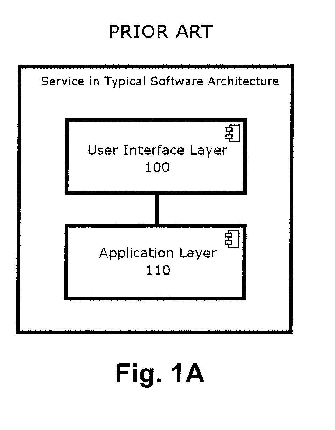

The solution known form the prior art is presented in Fig. 1A.

Figure 1B presents a new layer included between Application layer 110 and User Interface layer 100, forming Fault Detection System (FDS) 120.

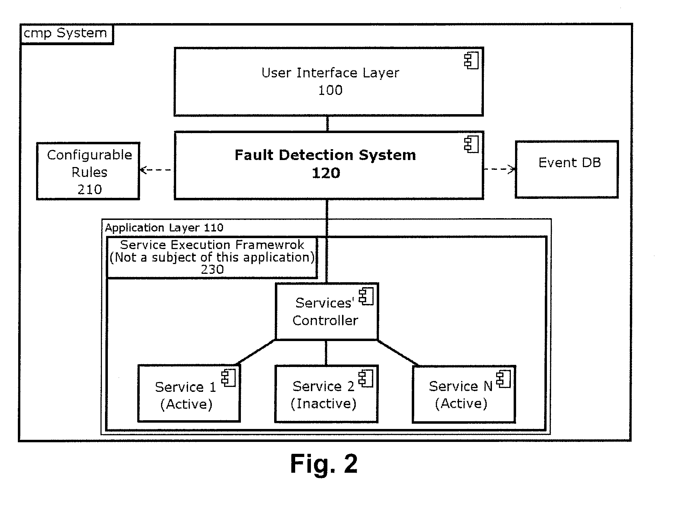

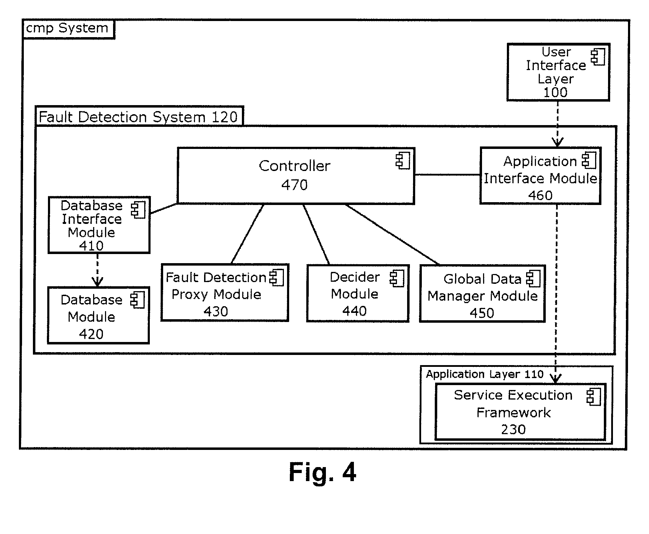

The overall solution architecture is presented on Figure 2. It shows that Fault Detection System 120 is placed in the middle, between User Interface layer 100 and Service Execution Framework 230 (Application layer 110). Application layer 110 is designed such that each service is a plug-in, registered and executing in a context of a Framework 230. At any time plug-in can be attached or detached - this is managed by Fault Detection System layer 120, which employs configurable rules 210 and communicates with Database module 420 (shown in Fig. 4) via Database Interface module 410 (shown in Fig. 4) in order to store statistic data. If number of failures for particular plug-in exceeds defined limit FDS 120 detaches the plug-in and triggers an alarm. Those actions are requested by Fault Detection Proxy module 430 (shown in Fig. 4) and executed by Controller 470 (shown in Fig. 4).

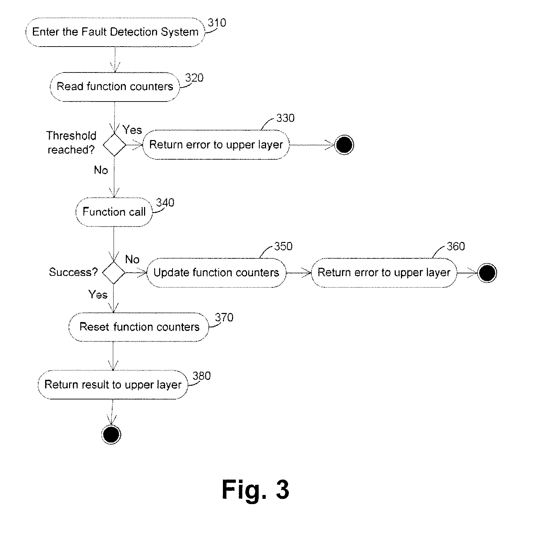

Figure 3 presents activities associated with request processing, from entering the Fault Detection System 310, to returning result 380 or error code 330, 360 to upper layer.

The statistic data (function counters) 320 should be stored in global application structures or shared memory, this is managed by the Global Data Manager module 450 (shown in Fig. 4). As a shared resource it should be access protected (to avoid unintended modifications). Single record, associated with a function, should contain:
● Function name
● Max failure threshold
● Max timeout threshold
● Current failures counter
● Block flag (threshold reached)

Any successful function call 340 should reset function counters 370, thus rendering function as not blocked, this is handled by the Decider module 440 (shown in Fig. 4).

Any unsuccessful function call 340 should update function counters 350 and then return error to upper layer 360.

When the FDS decides that certain operation reached its error limit in given timeframe, or behave improperly (doesn't return, timeouts) decision is made whether to allow this operation in the future or not, this is function of Decider module 440 (shown in Fig. 4). It is possible to block such failed calls for some time to avoid problems provided by this failure. The unblock conditions are also configurable per operation.

Figure 4 presents details of solution design. The software architecture is based on a plug-in architecture. Requests/responses are handled by Application Interface module 460 and then passed to the system for further processing. Each functional module (Database Interface module 410, Database module 420, Fault Detection Proxy module 430, Decider module 440, Global Data Manager module 450, Application Interface module 460, Controller 470) is responsible for different processing phase.

Below there is a description of particular modules presented in Fig. 4.

Database Interface module 410 is responsible for Database module 420 operations. Since Database is a bottleneck for real time systems, this module is used asynchronously - to flush cache data and store data in Database module 420. Database module 420 stores configuration and run-time data, associated with function calls statistics.

Fault Detection Proxy (FDP) module 430 is responsible for creating FDP responses when operation is blocked, verifying timeouts, tracking in-progress requests, finding duplicates. It handles two way communications (needs to pass messages to Application layer 110 and take the results).

Decider module 440 communicates with Fault Detection Proxy module 430 and is responsible for making decisions about blocking/unblocking requests (removing plug-in from service or not). It doesn't block/unblock requests directly. This module just set appropriate flag to say other modules how this request should be handled. Most logic related to system behavior is placed here.

Application Interface module 460 is an interface module which assigns internal event's IDs to external requests coming from User Interface layer 100. It is responsible for passing requests/responses from/to User Interface layer 100/Application layer 110. This is the place where requests are blocked if Decider module 440 sets appropriate flag. This is also the place where internal processing requests are created and passed to the Fault Detection Proxy module 430 system for further processing.

Global Data Manager module 450 is responsible for data handling. Fault Detection Proxy module 430 uses cache data to improve performance, configuration data to handle each User Interface layer 100 request independently, measurement data to calculate single request performance, overall system configuration data used by Controller 470. All of those data are handled and provided to other modules via Global Data Manager module 450.

Controller 470 is a central piece of software of plug-in system. It is responsible for module loading, events call flow (passing it to certain modules accordingly), creating/deleting timers related threads, creating/deleting event related threads, handling of thread pool, startup/shutdown of the system. Controller 470 is a functional module which can be implemented as a plug-in manager.

As to Database, FDP uses the Database module 420 to store data. Only Database module 420 cooperates with DB directly. Due to real-time nature of underlying application fast, in-memory DB is used.

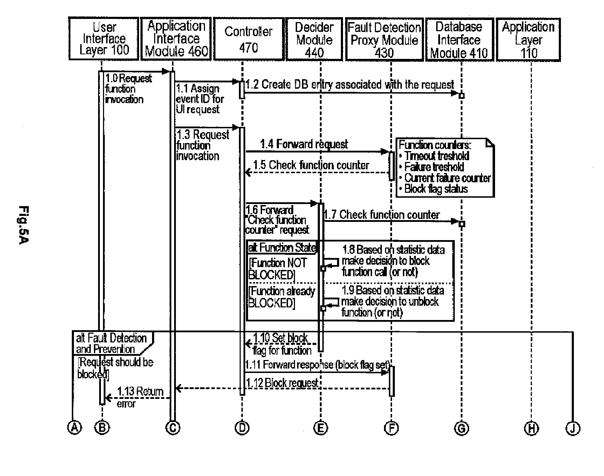

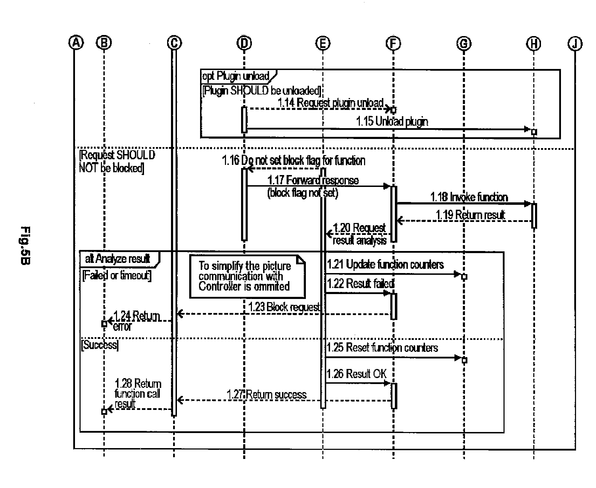

Figure 5 presents UML (Unified Modeling Language) sequence diagram illustrating dynamics of the system in more details. It depicts exchange of messages between external entities (User Interface layer 100, Application layer 110) and functional modules of Fault Detection System: Controller 470, Application Interface Module 460, Decider Module 440, Fault Detection Proxy Module 430, Database Interface Module 410. Each service request, from external entities (User Interface layer 100 and/or Application Interface module 460), triggers check in database functional component which validates whether given service is executable (has not reached "service blocked" threshold). Each service execution updates internal database, with service statistics, which are later used to assess service quality and allow Fault Detection System to decide whether service can be executed or not. If service is currently blocked Decider module 440 checks time-out setting to verify whether service can be unblocked. If service is unavailable then FDS returns an error to the User Interface layer 100, and can optionally disable failed plug-in. If service is available, then FDS requests function execution, stores invocation statistics and returns result to the User Interface layer 100.

Fault Detection System has been prototyped in Alcatel-Lucent's Voicemail System - CMS 5100 (Converged Messaging System). In this product services like Message Retrieval, Message Forwarding, Call Sender, Mailbox setting are triggered by subscribers through Telephony User Interface (TUI), which represents User Interface layer 100. TUI invokes particular service based on subscriber input (key-presses), which are translated by the Application Interface module 460 to FDS requests. All services are implemented and ran as independent plug-ins. All plug-ins are executed as processes on the top of the Service Execution Framework (SEF). If the execution of a plug-in fails (e.g. process returns specific error code or execution takes too much time), FDS detects such event and based on configurable rules 210 (stored in Database module 420 and accessed via Database Interface module 410) makes decision how to handle such failure (via Decider module 440). For example, a number of the same events caught within a predefined time interval, turns off the service and associated plug-in is deactivated (as requested by the Controller 470 and executed by Fault Detection Proxy module 430). Hence defective software is isolated from the product and cannot impact other plug-ins. For example, if Message Forward service failed e.g. 100 times because execution took too much time (this information is stored in Database module 420 and managed by the Global Data Manager module 450), then the service is turned off by the FDS. Next time a subscriber will be notified by a recorded announcement that particular service is not available. Administrator will be notified via alarm (e.g. SNMP trap) that system itself deactivated the service and technical support must be called to resolve it. Engineering team is able to quickly investigate the problem and resolve it by providing a new version of the plug-in or even restore the previous version of the plug-in.

If above failure of Message Forward service is caused by too high CPU usage, then FDS will protect entire system from the outage (CPU high usage will drop quickly after Message Forward service is deactivated). Therefore fundamental requirement of FDS system is met: system outage will not be caused by a single service failure.

In this solution each plug-in is compatible with SEF and FDS. There is a dedicated interface between plug-in and FDS that allows to monitor plug-in execution via return codes. The return codes are stored in a Database and can be used for post-processing or statistical analysis that will help to restore system.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Fault Detection System (120) placed between User Interface layer (100) and Service Execution Framework (230) in an Application layer (110), designed such that each service is a plug-in, registered and executed in a context of a Framework wherein Fault Detection System (120) can attach or detach plug-in at any time, the Fault Detection System (120) employing configurable rules (210) and communicating with database in order to store statistic data, the Fault Detection System (120) comprising functional modules.

2. Fault Detection System (120) according to claim 1, comprising, as a functional module, Controller (470) responsible for module loading, events call flow, creating/deleting timers related threads, creating/deleting event related threads, handling of thread pool, startup/shutdown of the system.

3. Fault Detection System (120) according to claim 1 or 2, comprising, as a functional module, Database Interface module (410) responsible for Database module (420) operations, storing configuration and run-time data.

4. Fault Detection System (120) according to any of claims 1 to 3, comprising, as a functional module, Fault Detection Proxy module (430) responsible for creating Fault Detection Proxy responses when operation is blocked, verifying timeouts, tracking in-progress requests, finding duplicates, and handling two way communication.

5. Fault Detection System (120) according to claim 4, comprising, as a functional module, Decider module (440) communicating with Fault Detection Proxy module (430) and responsible for making decisions about blocking/unblocking requests.

6. Fault Detection System (120) according to any of claims 1 to 5, comprising, as a functional module, Application Interface module (460) assigning internal event's identifiers to external requests coming from User Interface layer (100) and responsible for passing requests/responses from/to User Interface layer (100)/Application layer (110).

7. Fault Detection System (120) according to any of claims 1 to 6, comprising, as a functional module, Global Data Manager module (450) responsible for data handling.

8. Fault Detection System (120) according to any of claims 1 to 7, comprising, as a functional module, Database module (420) for storing data.

9. Fault Detection System (120) according to any of claims 1 to 8, wherein, if number of failures for particular plug-in exceeds defined limit, Fault Detection System (120) detaches the plug-in.

10. Fault Detection System (120) according to any of claims 1 to 9, wherein, if number of failures for particular plug-in exceeds defined limit, Fault Detection System (120) triggers an alarm.

11. Fault Detection System (120) according to any of claims 1 to 10, wherein the statistic data is stored in global application structures or shared memory.

12. Fault Detection System (120) according to any of claims 1 to 11, wherein statistic data is access protected.

13. Fault Detection System (120) according to any of claims 1 to 12, wherein single record of the statistic data contains: function name, max failure threshold, max timeout threshold, current failures counter, block flag (threshold reached).

14. Fault Detection System (120) according to any of claims 1 to 13, wherein, if a single function call fails within a specific period of time, any next call to this function will be blocked and immediate error reported.

15. Fault Detection System (120) according to any of claims 1 to 14, wherein any successful function call resets function counters, thus rendering service as not blocked.

16. Fault Detection System (120) according to any of claims 1 to 15, wherein, when the Fault Detection System (120) decides that a certain operation reached its error limit in given timeframe, or behave improperly, decision is made whether to allow this operation in the future or not.

17. A method of processing request in a Fault Detection System (120) placed between User Interface layer (100) and Service Execution Framework (230) in an Application layer (110) designed such that each service is a plug-in, registered and executing in a context of a Framework (230) wherein Fault Detection System (120) can attach or detach plug-in at any time, the Fault Detection System (120) employing configurable rules (210) and communicating with database in order to store statistic data, the Fault Detection System (120) comprising functional modules, the method comprising the steps of:
receiving a request from User Interface layer (100) directed to Service Execution Framework (230),
processing the request, and
returning result or error code based on configurable rules (210).

18. The method according to claim 17, comprising the further step of storing statistic data (function counters) in global application structures or shared memory.

19. The method according to claim 17 or 18, comprising the further step of blocking certain operation for a given time if that operation reaches its error limit in given timeframe.

20. The method according to any of claims 17 to 19, comprising the further step of blocking certain operation for a given time if that operation doesn't return or reaches timeout.

21. The method according to any of claims 17 to 20, comprising the further step of unblocking certain operation when configurable conditions are met.

22. The method according to any of claims 17 to 21, comprising the further step of resetting functions counters in case of successful function call and rendering function as not blocked.
